# EUROPEAN PATENT SPECIFICATION

(11) **EP 2 857 183 B1**
(45) Date of publication and mention of the grant of the patent: **31.01.2018**
(21) Application number: 13187153.5
(22) Date of filing: 02.10.2013
(51) Int. Cl.: B29D 7/01, B29C 47/00, B29C 47/86, B29C 47/88, B29C 55/00

(54) **Plastic film and a method for production thereof**
Kunststofffolie und Herstellungsverfahren dafür
Film plastique et son procédé de production

(43) Date of publication of application: 08.04.2015
(73) Proprietor: Doxa Plast i Värnamo AB, 331 52 Värnamo (SE)
(72) Inventor: Claesson, Stig, 331 93 Värnamo (SE); Claesson, John, 330 15 Bor (SE)
(74) Representative: Bergenstråhle Group AB

(56) References cited:
- EP-A1- 0 779 145
- FR-A1- 2 339 478
- GB-A- 1 436 788
- JP-A- S61 209 135
- US-A1- 2002 182 367

## Description

### TECHNICAL FIELD

The invention concerns a plastic film with one or more longitudinal bands having a thickness which is 3µm - 50µm thicker than the main portion of the film wherein each thicker band is formed integral with the main portion of the film in a single ply, and that at least one band forms a reinforced edge of the film.

The invention also concerns a method for producing a stretch film, wherein a molten polymer or polymer composition is extruded in a single ply and cooled, so that a film is formed.

Finally, the invention concerns the use of the film.

### PRIOR ART

Plastic film has many different fields of use. One such field of use is the packaging of a variety of products, either manually or with the aid of automatic equipment. For example, goods on a pallet may be wrapped with plastic film in order to secure the goods on the pallet during transport.

When large volumes of goods are to be transported, the wrapping process is automated. Typically, the pallet, loaded with its goods is placed on a rotatable table, and one end of a plastic film is drawn from a dispenser and is attached to the side of the pallet or the goods thereon, often by the aid of its clinging force. The pallet is then rotated several turns, while the dispenser is moved back and forth in a vertical direction, so that the pallet and the goods thereon is covered with several tiers of the plastic film. Often the plastic film is stretched before it is applied. Finally the plastic film is cut from the dispenser. The pallet and the goods thereon then form a stable unit, which may be transported securely to its destination, without the risk of the goods falling off from the pallet.

Another field of use for plastic film is the wrapping of freshly mowed grass into large ball-shaped packages, in order to form air-tight packages for ensilage, which is used as animal feed for agricultural purposes. Automatic equipment is used for wrapping the grass with several overlapping tiers of plastic film.

The chemical composition of the plastic film, its mechanical properties, as well as its thickness is adapted to its particular use, so that the film will serve its purpose when it has been applied. However, another important aspect of the plastic film is that it has to be easy to handle, especially with automatic equipment, since breakage of the film may lead to unexpected down-time of the equipment, delays in deliveries etc.

It has been found that the edges of many types of plastic film play a very important role when it comes to the overall strength of the film and the ease of handling thereof.
In EP2047985 the edges are described as the most sensitive areas, and damages to the edges may cause breakage of the film when it is applied. In EP2047985 the problem of mechanically strengthening a plastic film is solved by cutting strips from the borders of the film immediately after it has been cast and applying these strips on the edges of the main portion of the film.

In several other documents, such as EP1095759, the outermost portions of the film are folded over longitudinally at least once in order to reinforce the edges.

These solutions work reasonably well, at least in theory, but in practice problems may occur. Occasionally folds or creases accidentally appear either on the folded or cut off strip or on the main portion of the film in the area where the strip has been applied. The strength of the edge is seriously decreased in the area of such a crease, and a breakage of the plastic film may easily ensue, with in its turn leads to down-time of the equipment, delays etc. as described above.

Another drawback of the above methods of reinforcing the plastic film is that the speed of production may have to be lowered in order to avoid the formation of creases or problems with the equipment folding or cutting the film during production thereof. US-A-2002182367 discloses a plastic film which in one embodiment is said to be manufactured by extrusion from a flat die. The actual forming of integral strips is not discussed in this document, which also expressly states that the strips are not arranged at the edges of the film.
JP-A-61209135 discloses a plastic film which is less prone to blocking, i.e. its layers are prevented from adhering to one another, by the provision of narrow ribs, which are arranged close to one another.
FR 2 339 478 A1 discloses the manufacture of a plastic film with thicker and thinner zones, such as plastic carrier bags. The dynamic pressure from air blown into the zones that are intended to be thicker is regulated.
GB 1 436 788 discloses the manufacture of a high quality graphic or radiographic film with thicker edges, where the film is not stretched. In order to avoid the formation of die lines, an extrusion orifice forms the film, whereafter it is cooled on two smooth cooling surfaces in contact with opposite sides of the extruded film. At least one of the cooling surfaces has an electric potential.

### PROBLEM

It is the object of the present invention to provide a plastic film with a superior reinforcement of longitudinal areas thereof, thereby avoiding the problems associated with breakage of the film during handling.

### SOLUTION

This object will be attained if the initially mentioned plastic film is characterized in that the film is a stretch film formed by cast extrusion. Further advantages will be attained if the plastic film is further characterized by one or more of the features of claims 2.
Concerning the method of producing the stretch film, the object is attained if the initially mentioned method is characterized in that the polymer ply is cooled in one or more narrow areas, corresponding to the width and position of the thicker longitudinal band(s), before the main portion of the film is cooled.
Further advantages will be attained if the method is further characterized by one or more of the features of claims 4 to 6.

### BRIEF DESCRIPTION OF THE DRAWINGS

The invention will now be described with reference to the enclosed drawings. Herein:
- Fig 1: is a plan view of an embodiment of a plastic stretch film according to the invention;
- Fig 2: is a diagram illustrating the thickness of the plastic stretch film according to Fig 1;
- Fig 3: is a schematic view of parts the manufacturing equipment for the production of the plastic stretch film according to the invention;
- Fig 4a: is a first example of the shape of a nozzle included in the equipment according to the invention; and
- Fig 4b: is a second example of the shape of a nozzle included in the equipment according to the invention.

### PREFERRED EMBODIMENT

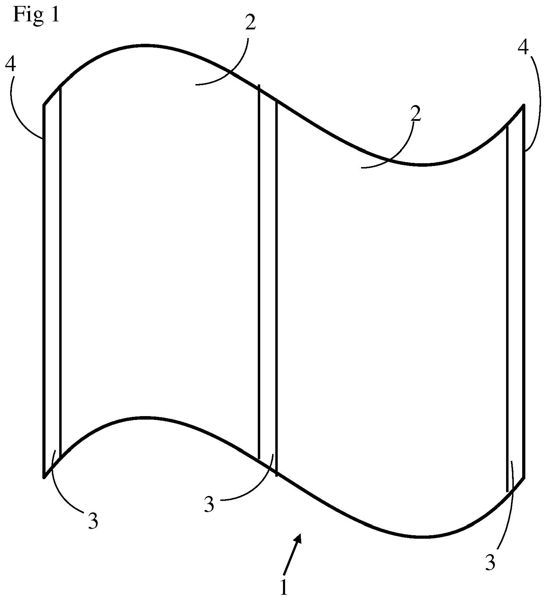

In fig 1 a segment of one embodiment of a plastic stretch film 1 according to the invention is shown schematically. Plastic films are well known per se, and this description will focus mainly on those features of the plastic stretch film 1, and of the production thereof, that are novel over the prior art.

The main material included in the plastic stretch film according to the invention is, in a preferred embodiment, polyethylene, which is recyclable. There are, however, numerous possibilities of varying the composition of the plastic stretch film 1. The plastic stretch film 1 may include several thin layers of different chemical composition and with different mechanical and chemical properties. Examples of such properties are the ability of the plastic stretch film 1 to cling to an adjacent surface, as well as the ability not to cling, or slip, to adjacent surfaces. Plastic stretch films are often produced with one surface displaying cling properties, whereas the other surface displays slip properties. Another possible property of the film is the ability to stretch to a large extent without breaking. Yet more properties are a predetermined maximum permeability of gases, such as oxygen and resistance to UV radiation. The thin layers included in the plastic stretch film 1 are formed immediately on manufacture, e.g. by cast extrusion, and they are not separable from one another, but form a unity. The person skilled in the art will realize even more possibilities of varying the composition of the film, which possibilities are all different embodiments of the invention.

The plastic stretch film 1 has a main portion 2 of a certain predetermined thickness, and at least one, in fig 1 three, bands 3 of a higher thickness. The bands 3 extend in the longitudinal direction of the plastic stretch film 1 along its entire length.

The predetermined thickness of the main portion 2 may vary, depending on the intended field of use of the plastic stretch film 1. The thickness of the main portion 2 is generally homogeneous as a result of the high precision during the manufacture thereof. The thickness is usually well controlled during the manufacture, so that a thickness between predetermined minimum and maximum values is attained with a minimal consumption of plastic material. Also, the predetermined thickness is important in order to achieve a predetermined strength of the plastic stretch film 1.

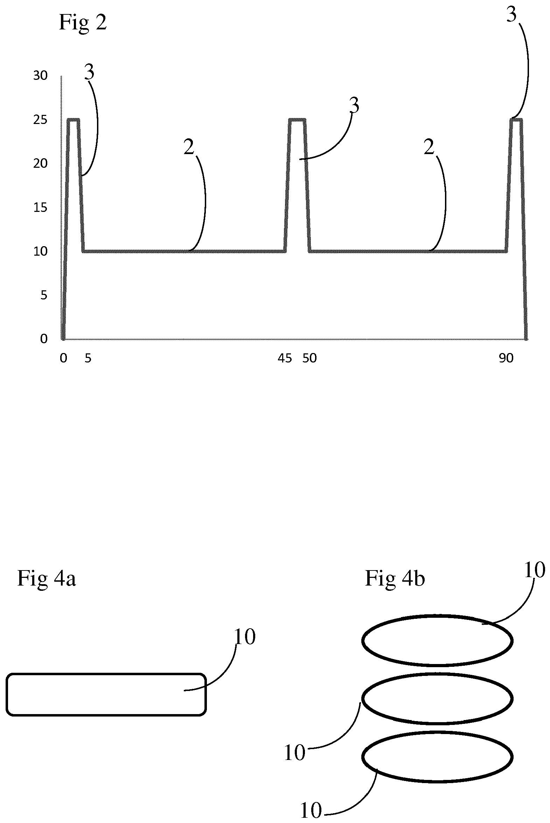

In fig 2 a diagram shows an example of the thickness distribution over the width of the film according to fig 1. In the example the bands 3 are 25µm thick, while the main portion 2 is 10 µm thick. In general the bands 3 are approximately 3-50 µm thicker than the main portion 2, preferably 10-20 µm thicker, and more preferably 15 µm thicker.

The bands 3 are provided along at least one of the side edges 4 in a preferred embodiment of the invention, and more preferably along both of the side edges 4.

As mentioned initially in this application, the side edges 4 of the plastic stretch film 1 are generally weak areas, which need to be reinforced in order to ensure a good overall performance of the plastic film 1 and to eliminate the risk of breakage starting at the edges of the film. In the preferred embodiment of the invention, the reinforcement is provided by making the plastic film 1 thicker in band-shaped areas 3 along the edges. The thicker bands 3 are formed integral with the main portion 2 of the film. The thicker bands 3 are formed in a single ply. Hence no cutting, turning or folding of the plastic stretch film 1 is needed, and the risk of creases being formed between plies of the film is eliminated.

Also, strong edges will contribute to the mechanical strength of a packaged unit, such as a wrapped pallet loaded with goods, where the reinforced edges 4 with the thicker bands 3 of the wrapped plastic stretch film 1 act as ropes wrapped around the pallet and the goods thereon, in addition to the main portion 2 of the film 1.

As is visible in fig 1, one or more of the thicker bands 3 may be arranged longitudinally on the plastic stretch film 1 at a distance from the edges 4. There are at least two advantages of such an arrangement.

Firstly, additional thicker bands 3 in the plastic film 1 contribute to further to the mechanical strength of the packaged unit, as described above for the reinforced edges 4. A similar "rope effect" will be obtained.

Secondly, arranging thicker bands 3 at a distance from the edges 4 facilitates cutting the plastic stretch film 1 lengthwise, if the cut is made in the thicker band 3, which is less prone to ripping or breaking when cut, than the main portion 2 of the film 1. The cut may be made during the manufacture of the film 1, before it has been rolled up for the first time. In this way, several rolls of film 1 with reinforced edges may be manufactured at the same time.

The thicker bands 3, regardless of whether they are arranged along the edges 4 or at a distance from the edges 4, also serve to reinforce the plastic stretch film 1 as a whole, which has the advantage that the larger main portions 2 of the film may have a predetermined thickness which is thinner than before, and still serve the same purpose. For example, where previously a film with a uniform thickness of approximately 20µm has been used, it is estimated that a film with main portions 2 with a thickness of 10µm and reinforced edges 4 of 25µm will be sufficient. In this way the amount of material used per length unit of the film 1 is decreased, which is advantageous from several points of view. The rolls of plastic film 1, containing the same lengths of film as before, will weigh less and will be easier to lift and handle, which is an ergonomical advantage. The lower weight of the rolls of plastic stretch film 1 will make transports easier and less fuel-consuming, which is an environmental advantage, along with the fact that less of the polymer materials comprised in the film 1 is consumed.

As mentioned previously, one possible use for the plastic stretch film 1 according to the invention is for wrapping around pallets with goods. The thicker bands 3 contribute greatly to the strength of the film 1 and to keeping the goods in place during transport, while the main portion protects the goods from rain, dust, etc. For this purpose the plastic film 1 is usually a stretch film, which after application in an outstretched state, retracts and thereby wraps itself tightly around the goods on the pallet to keep it in place.

Another possible use of a plastic stretch film 1 according to the invention is for wrapping agricultural products, such as grass in the production of ensilage. Provided that the composition of the polymers included in the plastic film 1 are adapted to this purpose, by reducing the oxygen permeability and providing a suitable UV resistance, as well as suitable stretch and cling properties, the reinforcing bands 3, especially at the edges 4, are highly useful. The ease of handling the film 1 in automated equipment, the reduced risk of breakage of the film, and the reduction of material consumption are some of the advantages associated with using the plastic film 1 according to the invention for agricultural purposes.

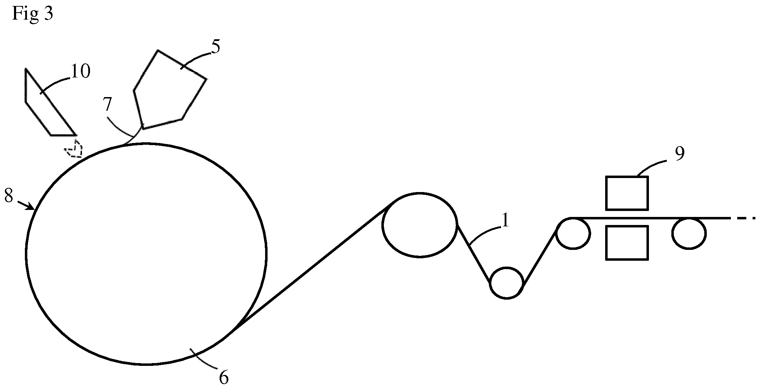

The principles of producing the plastic stretch film 1 according to the invention are shown in fig 3. A molten polymer or composition of polymers, in layers if necessary, is extruded from a die 5 of an extruder in a relatively thick single ply 7, about 800 µm onto a chill roll 6. The width of the ply in the axial direction of the chill roll 6 corresponds to the width of the produced plastic film 1 before it has been cut longitudinally, as the case may be.

The extruded polymer ply 7 will be draw into a thinner ply by the rotation of the roll 6, resulting in a cast plastic film in accordance with the prior art. At a certain distance from the extruder die 5, the molten polymer 7 will be chilled to a temperature of setting, and at this stage, the molten polymer 7 is no longer drawn into an ever thinner ply, but is transformed into a plastic stretch film 1, with a predetermined thickness, often in the range of 7-40 µm, and with predetermined properties. At this distance from the extruder die 5, where the polymer 7 is set, a so called frost line 8 is formed.

In order to create a band 3 with an increased thickness in the plastic stretch film 1 in accordance with the invention, the molten polymer ply 7 is cooled additionally in an area between the extruder die 5 and the frost line 8. The additional cooling results in a setting of the molten polymer 7 before it has reached the frost line 8 and before it has been drawn into the same low thickness as the rest (i. e. the main portions 2) of the plastic stretch film 1. The result is an area of higher thickness of the film 1, and as the process is continuous during long periods of time, with continuous extrusion of polymer material 7 by the extruder die 5 and continuous rotation of the chill roll 6, the result will be that the area 3 is band-shaped in the longitudinal direction of the plastic stretch film 1. Additional cooling may be performed in several areas along the width of the molten polymer ply 7 in order to create several parallel bands 3.

The plastic stretch film 1 with one or more longitudinal bands 3, produced in the manner just described, is forwarded at the speed of the rotating chill roll 6, measured by a measuring unit 9, cut longitudinally, if needed, and rolled up into rolls of a suitable size. The measuring unit is preferably coupled to a regulator for controlling the thickness of the different sections 2, 3 of the plastic stretch film 1, and the regulator controls the extruder die 5 and the cooling units 10 of the different parts of the plastic stretch film.

The additional cooling may be performed in different ways. In a preferred embodiment of the invention, compressed air is blown through one or more nozzles 10 directed towards the molten polymer ply 7 between the extruder die 5 and the frost line 8. The person skilled in the art will however realize that there are numerous other fluids, in gas or liquid form, which could be used with a similar cooling effect, such as carbon dioxide, nitrogen, water, a water mist, etc. The flow and pressure of the fluid used will have to be adjusted, so that the molten polymer material in the ply 7 is not displaced by the fluid stream from each nozzle 10.

Adjustments of the flow, pressure and temperature of the fluid will also have to take place, in order to ensure that the cooling effect is adequate to obtain the desired thickness of the bands 3, when various cooling fluids are used. The higher the cooling effect is, the quicker the molten polymer 7 will set, and the thicker the band 3 will be. Several nozzles 10 may be placed in sequence in the direction of rotation of the chill roll 6, in order to enhance the cooling effect. This is particularly useful for obtaining higher thicknesses of the bands 3, as the polymer material is not a particularly good conductor of heat. The cooling effect will have to be increased in order to disperse the heat throughout the whole molten polymer ply 7, as seen in a radial direction of the chill roll 6, without displacing the polymer material 7 at the surface by the pressure of the fluid jet from the nozzles 10.

Also, the placement of the nozzle or nozzles 10 will affect the thickness of the band 3. If a single nozzle, or group of nozzles, 10 is placed close to the frost line 8, the thickness of the resulting band 3 will be lower than if a nozzle 10 is placed closer to the extruder die 5. This is due to the fact that the general thickness of the molten polymer ply 7 is higher in the area close to the extruder die 5, whereas the molten polymer ply 7 will have been drawn thinner in the area close to the frost line 8.
The size and shape of the nozzles 10 may be varied in different ways in order to obtain the desired cooling effect with each particular cooling fluid. As mentioned previously, it is desirable that the pressure from the fluid jet on the molten polymer ply 7 is kept low, in order not to mechanically affect the surface of the polymer ply 7. In a preferred embodiment, experiments with compressed air have shown that a nozzle 10 with an approximately elliptical or rectangular cross section where the length of the major axis is in the range of 30-70 mm, as shown in fig 4a. Fig 4b shows the cross section of three nozzles 10 arranged in sequence, as described above.

### ALTERNATIVE EMBODIMENTS

Some further variations not described previously will be briefly mentioned. It is envisaged that the cooling may performed in another way than with an expulsion of a fluid towards the polymer ply 7. For instance the cooling could be performed by purely mechanical means, such as applying one or more auxiliary chill rolls with a width corresponding to the desired width of the bands in the area between the extruder die 5 and the frost line 8. Such auxiliary rolls would rotate in a direction opposite to the direction of rotation of the chill roll 6 described above, and their pressure against the polymer ply 7 would be very low.

An embodiment where the thickness of the bands 3 may be particularly enhanced includes providing the extruder die 5 with recesses in the opening through which the molten polymer 7, or composition of polymers, is extruded. By providing the recesses in the die 5, a higher amount of the polymer is extruded in these areas. The result will be that the extruded polymer ply 7 will have a higher thickness in these areas even before the cooling cylinder starts to draw it into a thinner ply, and the final result will be a plastic stretch film 1 with band shaped areas with a higher thickness. Preferably the molten polymer ply 7 is cooled in the thicker areas, as described above, so that the polymer in the ply 7 will set approximately simultaneously across the width of the film 1.

The method of producing the plastic stretch film 1 as a whole may also be varied, while one of the described cooling methods is applied.

## Claims

1. A plastic film with one or more reinforcing longitudinal bands (3) having a thickness which is 3µm - 50µm thicker than a main portion (2) of the film (1), wherein each thicker band (3) is formed integral with the main portion (2) of the film (1) in a single ply, and that at least one band (3) forms a reinforced edge (4) of the film (1) **characterized in that** the film is a stretch film formed by cast extrusion.

2. The plastic film (1) according to claim 1, **characterized in that** the thickness of the longitudinal bands (3) is 10µm-25µm thicker than the main portion (2).

3. A method for producing a stretch film (1) according to claim 1 or 2, wherein a molten polymer or polymer composition is extruded in a single ply (7) and cooled, so that a film is formed, **characterized in that** the polymer ply (7) is cooled in one or more narrow areas, corresponding to the width and position of the thicker longitudinal band(s) (3), before the main portion (2) of the film (1) is cooled.

4. The method according to claim 3, **characterized in that** the cooling in the narrow areas is performed by expulsion of a fluid from one or more nozzles (10) directed towards the polymer ply (7).

5. The method according to claim 3 or claim 4, **characterized in that** the fluid is compressed air.

6. The method according to any one of claims 3 to 5, **characterized in that** the molten polymer or polymer composition is extruded with an increased thickness in the narrow areas, by providing an extruder die (5) with recesses corresponding to the narrow areas wherein the polymer ply (7) is cooled.

7. The use of the film (1) according to claim 1 or 2 for wrapping pallets.

8. The use of the film (1) according to claim 1 or 2 for packaging agricultural produce.

## Patentansprüche

1. Kunststofffolie mit ein oder mehreren verstärkenden Längsbändern (3) mit einer Dicke, die 3 µm - 50 µm dicker als ein Hauptabschnitt (2) der Folie (1) ist, wobei jedes dickere Band (3) einstückig mit dem Hauptabschnitt (2) der Folie (1) in einer einzelnen Lage ausgebildet ist, und wobei dieses mindestens eine Band (3) einen verstärkten Rand (4) der Folie (1) bildet, **dadurch gekennzeichnet, dass** die Folie eine Dehnfolie ist, die durch Foliengießen gebildet wurde.

2. Kunststofffolie (1) nach Anspruch 1, **dadurch gekennzeichnet, dass** die Dicke der Längsbänder (3) 10 µm - 25 µm dicker als der Hauptabschnitt (2) ist.

3. Verfahren zur Herstellung einer Dehnfolie (1) nach Anspruch 1 oder 2, wobei ein geschmolzenes Polymer oder eine Polymerzusammensetzung in einer einzelnen Lage (7) extrudiert und abgekühlt wird, so dass eine Folie gebildet wird, **dadurch gekennzeichnet, dass** die Polymerlage (7) in ein oder mehreren schmalen Bereichen gekühlt wird, entsprechend der Breite und Position des dickeren Längsbands bzw. der dickeren Längsbänder (3), bevor der Hauptabschnitt (2) der Folie (1) gekühlt wird.

4. Verfahren nach Anspruch 3, **dadurch gekennzeichnet, dass** das Kühlen in den schmalen Bereichen durch Ausstoßen eines Fluids aus ein oder mehreren Düsen (10), die auf die Polymerlage (7) gerichtet sind, durchgeführt wird.

5. Verfahren nach Anspruch 3 oder 4, **dadurch gekennzeichnet, dass** das Fluid Druckluft ist.

6. Verfahren nach einem der Ansprüche 3 bis 5, **dadurch gekennzeichnet, dass** das geschmolzene Polymer oder die Polymerzusammensetzung mit einer erhöhten Dicke in den schmalen Bereichen extrudiert wird, indem eine Extrusionsdüse (5) mit Aussparungen, die den schmalen Bereichen entsprechen, in denen die Polymerlage (7) gekühlt wird, bereitgestellt wird.

7. Verwendung der Folie (1) nach Anspruch 1 oder 2 zum Einwickeln von Paletten.

8. Verwendung der Folie (1) nach Anspruch 1 oder 2 zum Verpacken von landwirtschaftlichen Erzeugnissen.

## Revendications

1. Film de plastique comportant une ou plusieurs bandes longitudinales de renforcement (3) ayant une épaisseur de 3 µm à 50 µm plus épaisse qu'une partie principale (2) du film (1), dans lequel chaque bande plus épaisse (3) est formée en une seule pièce avec la partie principale (2) du film (1) en une seule couche, et ladite au moins une bande (3) forme un bord renforcé (4) du film (1), **caractérisé en ce que** le film est un film étirable formé par extrusion coulée.

2. Film de plastique (1) selon la revendication 1, **caractérisé en ce que** l'épaisseur des bandes longitudinales (3) est de 10 µm à 25 µm plus épaisse que la partie principale (2).

3. Procédé de fabrication d'un film étirable (1) selon la revendication 1 ou 2, dans lequel un polymère ou une composition polymère fondu(e) est extrudé(e) en une seule couche (7) et refroidi(e), de façon à former un film, **caractérisé en ce que** la couche de polymère (7) est refroidie dans une ou plusieurs zones étroites, correspondant à la largeur et à la position de la ou des bandes longitudinales plus épaisses (3), avant que la partie principale (2) du film (1) ne soit refroidie.

4. Procédé selon la revendication 3, **caractérisé en ce que** le refroidissement dans les zones étroites est réalisé par expulsion d'un fluide à partir d'une ou plusieurs buses (10) dirigées vers la couche de polymère (7) .

5. Procédé selon la revendication 3 ou la revendication 4, **caractérisé en ce que** le fluide est de l'air comprimé.

6. Procédé selon l'une quelconque des revendications 3 à 5, **caractérisé en ce que** le polymère ou la composition polymère fondu(e) est extrudé(e) avec une épaisseur accrue dans les zones étroites, en pourvoyant une filière d'extrudeuse (5) de cavités correspondant aux zones étroites où la couche de polymère (7) est refroidie.

7. Utilisation du film (1) selon la revendication 1 ou 2 pour l'emballage de palettes.

8. Utilisation du film (1) selon la revendication 1 ou 2 pour l'emballage de produits agricoles.
